# EUROPEAN PATENT SPECIFICATION

(11) **EP 2 555 955 B1**
(45) Date of publication and mention of the grant of the patent: **11.12.2019**
(21) Application number: 11766244.5
(22) Date of filing: 06.04.2011
(51) Int. Cl.: B60T 7/12, B60K 28/12, B60R 21/34, B60T 17/22, B60W 10/184

(54) **SAFETY SYSTEM AND METHOD**
SICHERHEITSSYSTEM UND -VERFAHREN
SYSTÈME DE SÉCURITÉ ET PROCÉDÉ ASSOCIÉ

(30) Priority: 08.04.2010 SE 1050337
(43) Date of publication of application: 13.02.2013
(73) Proprietor: Scania CV AB, 151 87 Södertälje (SE)
(72) Inventor: SAMUELSSON, Peter, 645 91 Strängnäs (SE); HESSE, Johan, 611 56 Nyköping (SE); WINSA, Daniel, 974 36 Luleå (SE)
(74) Representative: Scania CV AB
(86) International application number: PCT/SE2011/050405
(87) International publication number: WO 2011/126441

(56) References cited:
- WO-A1-2009/129933
- CA-A1- 2 077 596
- DE-A1-102005 026 272
- GB-A- 2 340 902
- KR-A- 20040 006 872
- US-A- 4 838 617
- US-A1- 2002 189 882
- US-A1- 2003 221 922
- US-A1- 2005 270 177
- US-B1- 6 450 587
- US-B1- 6 601 669

## Description

### Field of the invention

The present invention relates to a safety system and a safety method for doors and windows in vehicles according to the preambles of the independent claims.

### Background to the invention

Vehicles used for transporting people are subject to rules about how they have to be configured and function in order to ensure passenger safety. For example, such a vehicle has usually to have a holding brake, which is an automatic device to prevent the vehicle from set in motion from stationary. This saves the driver from having to continually brake manually, e.g. while the vehicle is stationary at a stopping point. The holding brake, also called door brake, is also activated when any of the vehicle's doors are open and the vehicle is stationary. This means that if at least one door in the vehicle is open, it is not possible to set the vehicle in motion. The holding brake is deactivated automatically when the driver accelerates, provided that the doors are closed.

A vehicle for transporting people usually has a safety system for ensuring that nothing is trapped between the doors when they close. Such a system may comprise various types of seal strips in the doors, pressure sensors, IR detection etc. to detect anything which is between the doors. If anything is detected between the doors when they are about to close, the safety system causes them to reopen. At the same time, the holding brake is then activated, since it is applied as long as the doors are open.

US 6396395 describes a system for controlling various safety devices when a bus is stationary. For example, the doors may be caused to close when the parking brake is released.

Patent specification CN 200945861 Y describes an automatic brake system for a bus. The device can keep the bus in a braked state when passengers are to board or alight from the bus. A laser detector is provided at the rear door to detect passengers boarding or alighting.

If anything trapped in the door or doors is so small and thin that the door safety system cannot register it, activation of the safety system may possibly not take place until the seal strip is subjected to tension which results in a detectable pressure. As the existing holding brake function can only be activated when the vehicle is stationary or almost stationary, no brake can be applied. If this happens, it is necessary to rely on the driver noticing that something is trapped in the door so that he/she can manually brake the vehicle.

The object of the invention is to further improve the reliability of safety systems for vehicles, and in particular to ensure that nothing is left trapped in the vehicle's doors or windows when it has begun to move away from a boarding point.

### Summary of the invention

The object described above is achieved by a safety system for vehicles equipped with holding brakes, which system comprises at least one detection device (1, 2...n) situated close to the vehicle's doors or windows. The detection device (1, 2...n) is adapted to generating an indicating signal (1, 2...m) if one or more indicating criteria are fulfilled, and is provided with a control unit adapted to receiving a deactivation signal to the effect that the vehicle's holding brake has been deactivated, and if the deactivation signal indicates that the holding brake has been deactivated and if an indicating signal (1, 2...m) has been generated from a detection device (1, 2...n), then the control unit is adapted to sending a demand for braking to the vehicle's brake system in the form of a gradually increasing retardation torque, whereupon the brake system brakes the vehicle.

According to another aspect, the object is achieved by a safety method in a safety system for vehicles equipped with holding brakes, which system comprises at least one detection device (1, 2...n) situated close to the vehicle's doors or windows and adapted to generating an indicating signal (1, 2...m) if one or more indicating criteria are fulfilled, and
- if a deactivation signal has been received to the effect that the vehicle's holding brake has been deactivated, and
- if an indicating signal (1, 2...m) has been generated from said at least one detection device (1, 2...n), then a demand for braking is sent to the vehicle's brake system in the form of a gradually increasing retardation torque, whereupon the brake system brakes the vehicle.

The vehicle may also be automatically braked by the safety system and the method when it has begun to move. This provides assurance that nothing is left trapped in the vehicle's doors or windows when it has begun to move away from a boarding point.

When the vehicle has begun to move and something is trapped in a door, it is for example possible for the tension arising from the weight of the trapped object to cause an indicating signal (1, 2...m) to be generated by a detection device (1, 2...n). The safety system will then ensure that the vehicle is halted automatically and preferably that the door is opened. It is thus possible for whatever has been trapped to be freed without coming to harm.

Preferred embodiments are described in the dependent claims and the detailed description.

### Brief description of the attached drawings

The invention is described below with reference to the attached drawings, in which:
Figure 1 depicts an example of a safety system according an embodiment of the invention.
Figure 2 is a flowchart for a safety method according to an embodiment of the invention.
Figure 3 is a flowchart for a safety method according to another embodiment of the invention.
Figure 4 is a flowchart for a safety method according to a further embodiment of the invention.
Figure 5 is a flowchart for a safety method according to yet a further embodiment of the invention.

### Detailed description of preferred embodiments of the invention

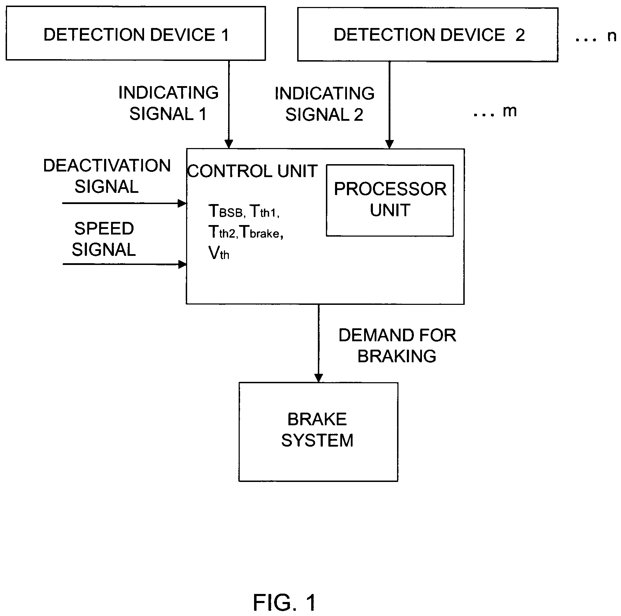

Figure 1 illustrates schematically the safety system according to the invention. The safety system is suitable for vehicles equipped with holding brakes, since it is to be used when the holding brake cannot be activated. The holding brake is represented in the diagrams by BSB, as an abbreviation for "bus stop brake". The holding brake is activated when the vehicle is stationary, and will be deactivated by, for example, the driver pressing the accelerator pedal. The system further comprises at least one detection device (1, 2...n) situated close to the vehicle's doors or windows and adapted to generating an indicating signal (1, 2...m) if one or more indicating criteria are fulfilled. The detection device (1, 2...n) may take the form of one or more seal strips in the doors, pressure sensors, IR detectors etc. Examples of possible indicating criteria are when a seal strip detects contact, a pressure sensor detects a pressure which exceeds a predetermined value, or an IR detector detects an object. The system comprises also a control unit adapted to receiving a deactivation signal to the effect that the vehicle's holding brake has been deactivated, and if the deactivation signal indicates that the holding brake has been deactivated and if an indicating signal (1, 2,...m) has been generated from said at least one detection device (1, 2...n), then the control unit is adapted to sending a demand for braking to the vehicle's brake system, whereupon the brake system brakes the vehicle. The vehicle can thus be subjected automatically to emergency braking when anything trapped is detected after the vehicle has begun to move.

The control unit comprises preferably a processor unit provided with a processor and memory able to perform calculations and method steps described in relation to the invention.

According to an embodiment, signals are exchanged via CAN (controller area network) which is a serial bus system specially developed for use in vehicles. The CAN data bus allows digital data exchange between sensors, regulating components, actuators, control devices etc. and provides assurance that more than one control unit can have access to the signals from a given sensor, in order to use them for control of components connected to them. Other systems for exchange of signals are nevertheless also conceivable.

According to an embodiment, the control unit is adapted to measuring the time T_{BSB} from when the holding brake is deactivated, and to sending a demand for braking to the vehicle's brake system when T_{BSB} is less than a preset threshold value Tₜₕ₁, provided that a deactivation signal to the control unit has been received to the effect that the holding brake has been deactivated, and provided that an indicating signal (1, 2...m) has been generated from said at least one detection device (1, 2...n). By measuring and monitoring T_{BSB} from when the holding brake was deactivated, the system can verify that not too long a time has passed from when the vehicle left the stopping point to when it is braked. If the time is too long, the vehicle may have reached too high a speed, with consequent risk of harm to passengers if it is braked quickly. Tₜₕ₁ is preferably a value between 2 and 20 seconds. This avoids the function being misused when time has passed since the vehicle last halted.

The safety method according to an embodiment is adapted to receiving a speed signal which indicates the vehicle's speed, and to sending a demand for braking to the vehicle's brake system when the vehicle's speed V is less than a preset threshold value Vₜₕ, provided that a deactivation signal to the control unit has been received to the effect that the holding brake has been deactivated and provided that an indicating signal (1, 2...m) has been generated from said at least one detection device (1, 2...n). By monitoring the vehicle's speed after the holding brake has been deactivated, the system can verify that it is not too high when the vehicle is braked. If the vehicle has reached too high a speed, there is risk of harm to passengers if the vehicle is braked quickly. Vₜₕ is preferably a value of between 1 and 15 km/s. This also avoids the function being misused at high speeds.

The control unit is preferably adapted to sending a demand for braking to the vehicle's brake system in the form of a gradual increasing retardation torque. The criteria for how quickly the brake torque may increase are that the vehicle should halt as soon as possible and that passengers should come to no harm. This depends also on the gradient of the road, the weight of the vehicle, etc. The brake torque should nevertheless cause the vehicle to halt within between 0.1 and 5 seconds, preferably within 1 second. Demands for retardation torque are preferably sent to the service brakes.

According to an embodiment, when said demand for braking has been sent to the vehicle's brake system, the control unit is adapted to blocking the vehicle's accelerator pedal. This makes it impossible for the driver to set the vehicle in motion before the safety system has deactivated the emergency stop and has thereby deactivated the demand for braking to the vehicle's brake system.

After an emergency stop has occurred, which means that said demand for braking has been sent to the vehicle's brake system, it is desired to be able to deactivate the emergency stop in order to be able to continue driving the vehicle. To deactivate the emergency stop, the control unit is therefore preferably adapted to measuring the time T_{brake} from when said demand for braking was sent, and to allowing, when T_{brake} is greater than a threshold value Tₜₕ₂, a deactivation demand to be sent to the vehicle's brake system to cancel said demand for braking. The emergency stop can thus not be deactivated until a certain time has passed.

According to an embodiment, the emergency stop can be deactivated by putting the vehicle's gears into neutral. The control unit is then adapted to receiving a neutral-gear signal to the effect that the vehicle's gearbox is in neutral gear. According to an embodiment, the control unit is adapted to sending a deactivation demand to the vehicle's brake system to cancel said demand for braking, if said demand for braking has been sent, a neutral-gear signal has thereafter been received and T_{brake} > Tₜₕ₂. A certain time Tₜₕ₂ after the emergency stop, the driver can therefore deactivate it by putting the vehicle's gears into neutral. The emergency stop may instead be deactivated by opening of the door or window where a detection device (1, 2...n) has indicated that something is trapped. The control unit is then adapted to receiving an open signal to the effect that the relevant door or window is being or has been opened. According to an embodiment, the control unit is adapted to sending a deactivation demand to the vehicle's brake system to cancel said demand for braking, if said demand for braking has been sent, an open signal has thereafter been received and T_{brake} > Tₜₕ₂. After a certain time Tₜₕ₂, the emergency stop can therefore be deactivated by opening of the relevant door or window. A further way of deactivating the emergency stop may be by the driver depressing the accelerator pedal and thus accelerating the vehicle. This does however to be preceded by some other choice having been made, e.g. by the vehicle's gears having been put into neutral or by the relevant door or window having been opened. The control unit is then adapted to receiving an acceleration signal which indicates whether the vehicle is accelerating, and to sending, if said demand for braking has been sent, an acceleration signal has thereafter been received and a neutral-gear signal has been received, a deactivation demand to the vehicle's brake system to cancel said demand for braking. Instead of the criterion "neutral-gear signal received" as in the previous sentence, the criterion may instead be "open signal received". This makes it possible for the driver, provided that some other choice such as putting the vehicle's gearbox into neutral or opening the relevant door or window has been made, to deactivate the emergency stop and continue driving the vehicle. Activation of the vehicle's holding brake may also deactivate the emergency stop. A further criterion other than the holding brake being activated may be that the door or window where a detection device (1, 2...n) has indicated that something is trapped has to be opened before the emergency stop is deactivated.

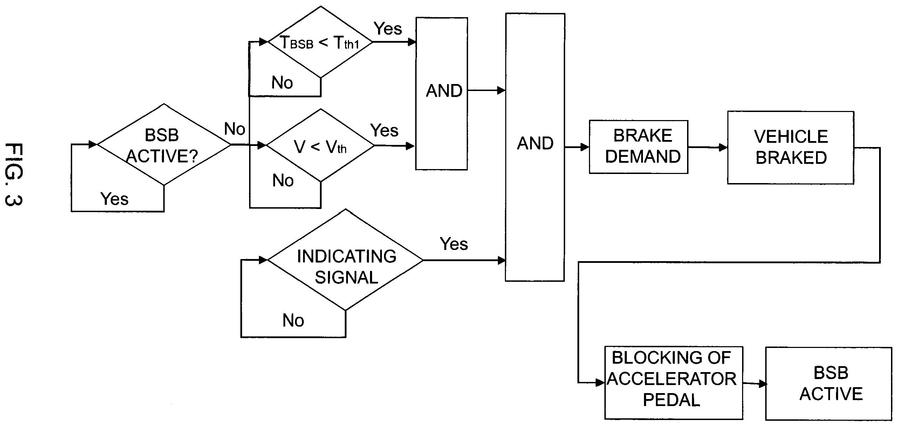

The emergency stop may also be deactivated by combining two or more of the above methods, as illustrated in examples below with reference to Figures 3-5.

The control unit may also be adapted to reinstating a braking demand after a number X of successive attempts to start the engine. X may for example be 10 to 30 attempts. It is thus possible to be certain of starting the engine and setting the vehicle in motion irrespective of what happens with other functions.

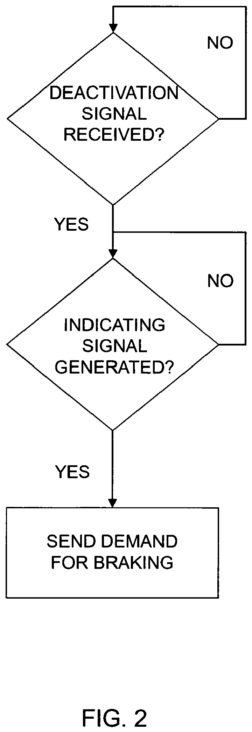

The invention relates also to a safety method in a safety system for vehicles which is illustrated by the flowchart in Figure 2. Under this method, if a deactivation signal has been received to the effect that the vehicle's holding brake has been deactivated, and if an indicating signal (1, 2...m) has been generated from a detection device (1, 2...n), then a demand for braking is sent to the vehicle's brake system, whereupon the brake system brakes the vehicle. It is thus possible to provide assurance that the vehicle can also be braked automatically when it is in motion.

Figure 3 depicts an example of a preferred method for activating the emergency stop. The holding brake BSB is active, which means that the vehicle is stationary, e.g. at a stopping point to let passengers on and off. Doors and possibly windows close and the driver depresses the accelerator pedal to set the vehicle in motion, thereby deactivating the holding brake. The deactivation of the holding brake sets running the time T_{BSB}, i.e. the time from when the holding brake is deactivated. In this example, the vehicle's speed V is also monitored, but according to an embodiment only one out of T_{BSB} and the vehicle's speed V is monitored.

If an indicating signal (1, 2...m) is generated after deactivation of the holding brake, T_{BSB} is less than a preset threshold value Tₜₕ₁ and the vehicle's speed V is less than a preset threshold value Vₜₕ, then a demand for braking is sent to the vehicle's brake system. Said demand for braking is preferably sent to the vehicle's brake system in the form of a gradually increasing brake torque, whereupon the vehicle is braked.

During the time when said emergency braking is activated and said demand for braking has therefore been sent to the vehicle's brake system, the vehicle's accelerator pedal is preferably blocked. When the vehicle's speed has dropped below a certain level, the vehicle's holding brake is activated. The holding brake and the emergency stop braking are then applied simultaneously.

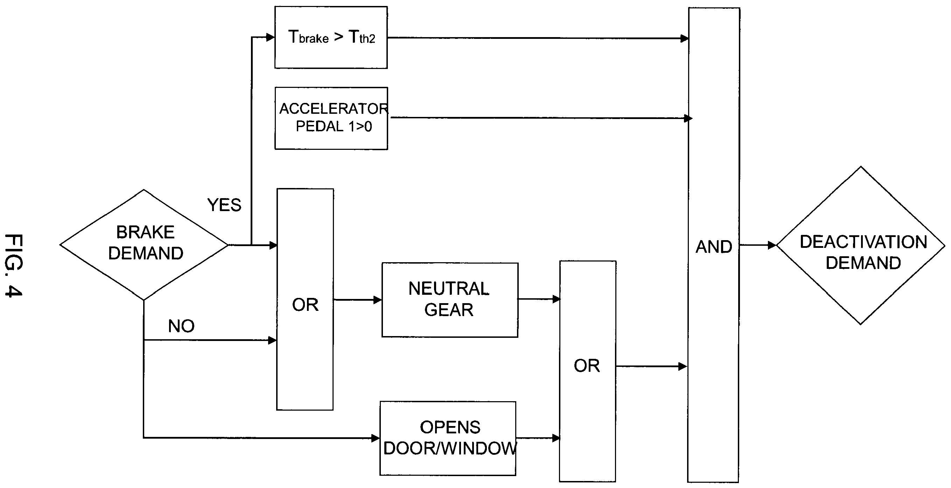

Figure 4 depicts an example of how the emergency brake may be deactivated. When a brake torque is demanded, the time T_{brake} from when said demand for braking was sent is measured. According to an embodiment, when T_{brake} is greater than a threshold value Tₜₕ₂, a deactivation demand is sent to the vehicle's brake system to cancel said demand for braking. In this example, for a deactivation demand to be sent to the brake system, it is also necessary that an acceleration signal to the effect that the vehicle is accelerating is received and that the vehicle's gears are in neutral or that the door or window from which an indicating signal (1, 2...m) has been generated has been opened. If the safety system incorrectly detects that something is trapped in the door, the driver has to be able to put the vehicle's gears into neutral in order to be able to deactivate the emergency brake. A neutral-gear signal is then received to the effect that the vehicle's gearbox is in neutral gear.

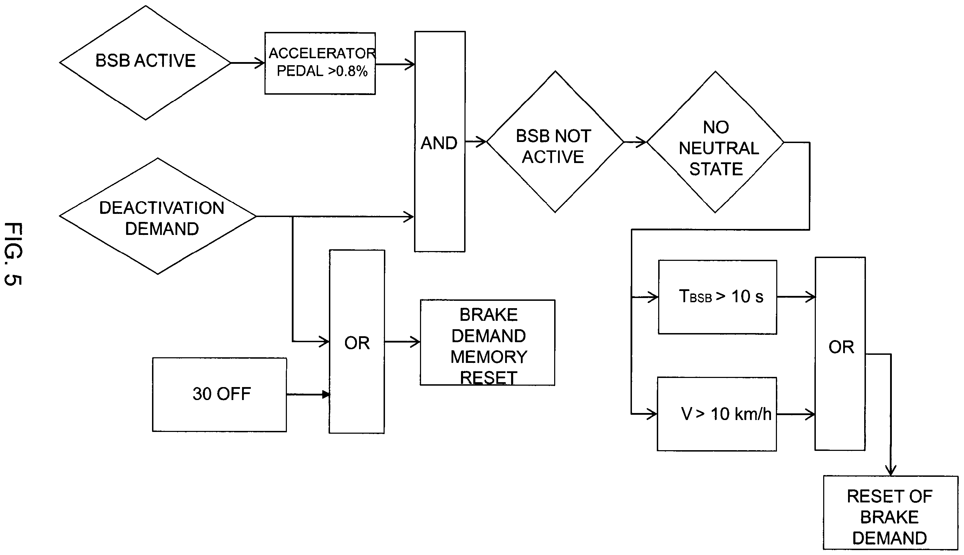

Figure 5 depicts an example of how the vehicle is restored to a drivable state after a deactivation demand has been sent. Provided that the holding brake is activated, the vehicle is accelerating and a deactivation demand has been sent, then the holding brake is deactivated. If no fault occurs, a deactivation demand is never issued, so a braking demand can be reinstated after a number X of successive attempts to start the engine. In this example X=30 but might be some other number of attempts. The vehicle's braking demand is reinstated when the holding brake is no longer activated, the vehicle's gearbox is not in neutral gear and T_{BSB} is greater than a threshold value which in the example here depicted is 10 seconds or the time the vehicle takes to reach a certain speed which in the example depicted is 10 km/h. The vehicle is therefore ready to reactivate the emergency stop. The values indicated are merely examples.

The invention relates also to a computer programme product comprising computer programme instructions for enabling a computer system in a vehicle to perform the above steps according to the method when the computer programme instructions are run on said computer system. The invention comprises also a computer programme product which has the computer programme instructions stored in it on a medium which can be read by a computer system.

The present invention is not confined to the embodiments described above. Sundry alternatives, modifications and equivalents may be used. The above embodiments therefore do not limit the scope of the invention, which is defined by the attached claims.

## Claims

1. A safety system for vehicles equipped with holding brakes, which system comprises at least one detection device (1, 2...n) situated close to the vehicle's doors or windows and adapted to generating an indicating signal (1, 2...m) if one or more indicating criteria are fulfilled,
**characterised in that** the system is provided with
- a control unit adapted to receiving a deactivation signal to the effect that the vehicle's holding brake has been deactivated, and
- if the deactivation signal indicates that the holding brake has been deactivated and
- if an indicating signal (1, 2...m) has been generated from said at least one detection device (1, 2...n), then the control unit is adapted to sending a demand for braking to the vehicle's brake system in the form of a gradually increasing retardation torque, whereupon the brake system brakes the vehicle.

2. A safety system according to claim 1, in which the control unit is adapted to measuring the time T_{BSB} from when the holding brake is deactivated, and to sending a demand for braking to the vehicle's brake system when T_{BSB} is less than a preset threshold value Tₜₕ₁, a deactivation signal has been received to the effect that the holding brake has been deactivated, and an indicating signal (1, 2...m) has been generated from said at least one detection device (1, 2...n).

3. A safety system according to claim 1 or 2, in which the control unit is adapted to receiving a speed signal which indicates the vehicle's speed, and to sending a demand for braking to the vehicle's brake system when the vehicle's speed V is less than a preset threshold value Vₜₕ, a deactivation signal to the control unit has been received to the effect that the holding brake has been deactivated, and an indicating signal (1, 2...m) has been generated from said at least one detection device (1, 2...n).

4. A safety system according to any one of the foregoing claims, in which the control unit is adapted to blocking the vehicle's accelerator pedal if said demand for braking has been sent to the vehicle's brake system.

5. A safety system according to any one of the foregoing claims, in which the control unit is adapted to measuring the time T_{brake} from when said demand for braking was sent, and to allowing, when T_{brake} > Tₜₕ₂, where Tₜₕ₂ is a preset threshold value, a deactivation demand to be sent to the vehicle's brake system to cancel said demand for braking.

6. A safety system according to claim 5, in which the control unit is adapted to receiving a neutral-gear signal to the effect that the vehicle's gearbox is in neutral gear.

7. A safety system according to claim 5, in which the control unit is adapted to receiving an open signal to the effect that the relevant door or window has been opened.

8. A safety system according to claim 6, in which the control unit is adapted to sending a deactivation demand to the vehicle's brake system to cancel said demand for braking, if said demand for braking has been sent, a neutral-gear signal has thereafter been received and T_{brake} > Tₜₕ₂.

9. A safety system according to claim 7, in which the control unit is adapted to sending a deactivation demand to the vehicle's brake system to cancel said demand for braking, if said demand for braking has been sent, an open signal has thereafter been received and T_{brake} > Tₜₕ₂.

10. A safety system according to any one of claims 1-6 or 8, in which the control unit is adapted to receiving an acceleration signal which indicates whether the vehicle is accelerating, and to sending, if said demand for braking has been sent, an acceleration signal has thereafter been received and a neutral-gear signal has been received, a deactivation demand to the vehicle's brake system to cancel said demand for braking.

11. A safety system according to any one of claims 1-5, 7 or 9, in which the control unit is adapted to receiving an acceleration signal which indicates whether the vehicle is accelerating, and to sending, if said demand for braking has been sent, an acceleration signal has thereafter been received and an open signal has been received, a deactivation demand to the vehicle's brake system to cancel said demand for braking.

12. A safety system according to any one of the foregoing claims, in which the control unit is adapted to reinstating a braking demand after a number X of successive attempts to start the engine.

13. A safety method in a safety system for vehicles equipped with holding brakes, which system comprises at least one detection device (1, 2...n) situated close to the vehicle's doors or windows and adapted to generating an indicating signal (1, 2...m) if one or more indicating criteria are fulfilled,
**characterised in that** the method comprises that
- if deactivation signal has been received to the effect that the vehicle's holding brake has been deactivated and
- if an indicating signal (1, 2...m) has been generated from said at least one detection device (1, 2...n), then a demand for braking is sent to the vehicle's brake system in the form of a gradually increasing retardation torque, whereupon the brake system brakes the vehicle.

14. A safety method according to claim 13, which comprises measuring the time T_{BSB} from when the holding brake is deactivated and sending a demand for braking to the vehicle's brake system when T_{BSB} is greater than a preset threshold value Tₜₕ₁, provided that a deactivation signal has been received to the effect that the holding brake has been deactivated, and provided that an indicating signal (1, 2...m) has been generated from said at least one detection device (1, 2...n).

15. A safety method according to claim 13 or 14, which comprises sending a demand for braking to the vehicle's brake system when the vehicle's speed is greater than a preset threshold value Vₜₕ, provided that a deactivation signal has been received to the effect that the vehicle's holding brake has been deactivated, and provided that an indicating signal (1, 2...m) has been generated from said at least one detection device (1, 2...n).

16. A safety method according to any one of claims 13-15, which comprises blocking the vehicle's accelerator pedal if said demand for braking has been sent to the vehicle's brake system.

17. A safety method according to any one of claims 13-16, which comprises measuring the time T_{brake} from when said demand for braking was sent, and to allowing, when T_{brake} > Tₜₕ₂, a deactivation demand to be sent to the vehicle's brake system to cancel said demand for braking.

18. A safety method according to claim 17, which comprises receiving a neutral-gear signal to the effect that the vehicle's gearbox is in neutral gear.

19. A safety method according to claim 17, which comprises receiving an open signal to the effect that the relevant door or window has been opened.

20. A safety method according to claim 18, which comprises sending a deactivation demand to the vehicle's brake system to cancel said demand for braking, if said demand for braking has been sent, a neutral-gear signal has thereafter been received and T_{brake} > Tₜₕ₂.

21. A safety method according to claim 19, which comprises sending a deactivation demand to the vehicle's brake system to cancel said demand for braking, if said demand for braking has been sent, an open signal has thereafter been received and T_{brake} > Tₜₕ₂.

22. A safety method according to any one of claims 13-18 or 20, which comprises receiving an acceleration signal which indicates whether the vehicle is accelerating, and sending, if said demand for braking has been sent, an acceleration signal has thereafter been received and a neutral-gear signal has been received, a deactivation demand to the vehicle's brake system to cancel said demand for braking.

23. A safety method according to any one of claims 13-17, 19 or 21, which comprises receiving an acceleration signal which indicates whether the vehicle is accelerating, and sending, if said demand for braking has been sent, an acceleration signal has thereafter been received and an open signal has been received, a deactivation demand to the vehicle's brake system to cancel said demand for braking.

24. A safety method according to any one of claims 13-23, which comprises reinstating a braking demand after a number X of successive attempts to start the engine.

25. A computer programme product comprising computer programme instructions for enabling a computer system in a vehicle to perform steps according to the method of any of claims 13-24 when the computer programme instructions are run on said computer system.

26. A computer programme product according to claim 25, in which the computer programme instructions are stored on a medium which can be read by a computer system.

## Patentansprüche

1. Sicherheitssystem für mit Feststellbremsen ausgerüstete Fahrzeuge, wobei das System mindestens eine Erfassungseinrichtung (1, 2 ... n) aufweist, die sich nahe der Türen oder Fenster des Fahrzeugs befindet und dazu eingerichtet ist, ein Hinweissignal (1, 2 ... m) zu erzeugen, falls ein oder mehrere Hinweiskriterien erfüllt sind,
**dadurch gekennzeichnet, dass** das System ausgestattet ist mit
- einer Steuereinheit, die zum Empfangen eines Deaktivierungssignals eingerichtet ist, welches angibt, dass die Feststellbremse des Fahrzeugs deaktiviert worden ist, und
- falls das Deaktivierungssignal angibt, dass die Feststellbremse deaktiviert worden ist und
- falls ein Hinweissignal (1, 2 ... m) von der zumindest einen Erfassungseinrichtung (1, 2 ... n) erzeugt worden ist, die Steuereinheit dann dazu eingerichtet ist, eine Bremsanforderung in Gestalt eines allmählich zunehmenden Verzögerungsmoments an das Fahrzeugbremssystem zu senden, woraufhin das Bremssystem das Fahrzeug bremst.

2. Sicherheitssystem nach Anspruch 1, bei dem die Steuereinheit dazu eingerichtet ist, die Zeit T_{BSB} von dem Zeitpunkt an zu messen, zu dem die Feststellbremse deaktiviert wird, und eine Bremsanforderung an das Fahrzeugbremssystem zu senden, wenn T_{BSB} kleiner ist als ein voreingestellter Schwellenwert Tₜₕ₁, ein Deaktivierungssignal empfangen worden ist, welches angibt, dass die Feststellbremse deaktiviert worden ist, und ein Hinweissignal (1, 2 ... m) von der zumindest einen Erfassungseinrichtung (1, 2 ... n) erzeugt worden ist.

3. Sicherheitssystem nach Anspruch 1 oder 2, bei dem die Steuereinheit dazu eingerichtet ist, ein die Geschwindigkeit des Fahrzeugs angebendes Geschwindigkeitssignal zu empfangen und eine Bremsanforderung an das Fahrzeugbremssystem zu senden, wenn die Fahrzeuggeschwindigkeit V niedriger ist als ein voreingestellter Schwellenwert Vₜₕ, ein Deaktivierungssignal an die Steuereinheit empfangen worden ist, welches angibt, dass die Feststellbremse deaktiviert worden ist, und ein Hinweissignal (1, 2 ... m) von der zumindest einen Erfassungseinrichtung (1, 2 ... n) erzeugt worden ist.

4. Sicherheitssystem nach einem der vorhergehenden Ansprüche, bei dem die Steuereinheit dazu eingerichtet ist, das Gaspedal des Fahrzeugs zu blockieren, falls die Bremsanforderung an das Fahrzeugbremssystem gesandt worden ist.

5. Sicherheitssystem nach einem der vorhergehenden Ansprüche, bei dem die Steuereinheit dazu eingerichtet ist, die Zeit T_{brake} von dem Zeitpunkt an zu messen, zu dem die Bremsanforderung gesendet wurde, und zu gestatten, wenn T_{brake} > Tₜₕ₂, wobei Tₜₕ₂ ein voreingestellter Schwellenwert ist, eine Deaktivierungsanforderung zum Aufheben der Bremsanforderung an das Fahrzeugbremssystem zu senden.

6. Sicherheitssystem nach Anspruch 5, bei dem die Steuereinheit dazu eingerichtet ist, ein Leerlaufsignal zu empfangen, welches angibt, dass sich das Getriebe des Fahrzeugs im Leerlauf befindet.

7. Sicherheitssystem nach Anspruch 5, bei dem die Steuereinheit dazu eingerichtet ist, ein Offensignal zu empfangen, welches angibt, dass die betreffende Tür oder das Fenster geöffnet worden ist.

8. Sicherheitssystem nach Anspruch 6, bei dem die Steuereinheit dazu eingerichtet ist, eine Deaktivierungsanforderung zum Aufheben der Bremsanforderung an das Fahrzeugbremssystem zu senden, falls die Bremsanforderung gesendet worden ist, danach ein Leerlaufsignal empfangen worden ist und T_{brake} > Tₜₕ₂ ist.

9. Sicherheitssystem nach Anspruch 7, bei dem die Steuereinheit dazu eingerichtet ist, eine Deaktivierungsanforderung zum Aufheben der Bremsanforderung an das Fahrzeugbremssystem zu senden, falls die Bremsanforderung gesendet worden ist, danach ein Offensignal empfangen worden ist und T_{brake} > Tₜₕ₂ ist.

10. Sicherheitssystem nach einem der Ansprüche 1 bis 6 oder 8, bei dem die Steuereinheit dazu eingerichtet ist, ein Beschleunigungssignal zu empfangen, welches angibt, ob das Fahrzeug beschleunigt, und, falls die Bremsanforderung gesendet worden ist, danach ein Beschleunigungssignal empfangen worden ist und ein Leerlaufsignal empfangen worden ist, eine Deaktivierungsanforderung zum Aufheben der Bremsanforderung an das Fahrzeugbremssystem zu senden.

11. Sicherheitssystem nach einem der Ansprüche 1 bis 5, 7 oder 9, bei dem die Steuereinheit dazu eingerichtet ist, ein Beschleunigungssignal zu empfangen, welches angibt, ob das Fahrzeug beschleunigt, und, falls die Bremsanforderung gesendet worden ist, danach ein Beschleunigungssignal empfangen worden ist und ein Offensignal empfangen worden ist, eine Deaktivierungsanforderung zum Aufheben der Bremsanforderung an das Fahrzeugbremssystem zu senden.

12. Sicherheitssystem nach einem der vorhergehenden Ansprüche, bei dem die Steuereinheit dazu eingerichtet ist, eine Bremsanforderung nach einer Anzahl X aufeinanderfolgender Versuche zum Starten des Motors wieder in Kraft zu setzen.

13. Sicherheitsverfahren in einem Sicherheitssystem für mit Feststellbremsen ausgerüstete Fahrzeuge, wobei das System zumindest eine Erfassungseinrichtung (1, 2 ... n) aufweist, die sich nahe der Türen oder Fenster des Fahrzeugs befindet und dazu eingerichtet ist, ein Hinweissignal (1, 2 ... m) zu erzeugen, falls ein oder mehrere Hinweiskriterien erfüllt sind,
**dadurch gekennzeichnet, dass** das Verfahren umfasst
- falls ein Deaktivierungssignal empfangen worden ist, welches angibt, dass die Feststellbremse des Fahrzeugs deaktiviert worden ist, und
- falls ein Hinweissignal (1, 2 ... m) von der zumindest einen Erfassungseinrichtung (1, 2 ... n) erzeugt worden ist, dann eine Bremsanforderung in Gestalt eines allmählich zunehmenden Verzögerungsmoments an das Fahrzeugbremssystem gesendet wird, woraufhin das Bremssystem das Fahrzeug bremst.

14. Sicherheitsverfahren nach Anspruch 13, welches ein Messen der Zeit T_{BSB} von dem Zeitpunkt an umfasst, zu dem die Feststellbremse deaktiviert wird, und ein Senden einer Bremsanforderung an das Fahrzeugbremssystem umfasst, wenn T_{BSB} größer ist als ein voreingestellter Schwellenwert Tₜₕ₁, vorausgesetzt dass ein Deaktivierungssignal empfangen worden ist, welches angibt, dass die Feststellbremse deaktiviert worden ist, und vorausgesetzt, dass ein Hinweissignal (1, 2 ... m) von der zumindest einen Erfassungseinrichtung (1, 2 ... n) erzeugt worden ist.

15. Sicherheitsverfahren nach Anspruch 13 oder 14, welches ein Senden einer Bremsanforderung an das Fahrzeugbremssystem umfasst, wenn die Geschwindigkeit des Fahrzeugs größer ist als ein vorbestimmter Schwellenwert Vₜₕ, vorausgesetzt dass ein Deaktivierungssignal empfangen worden ist, welches angibt, dass die Feststellbremse des Fahrzeugs deaktiviert worden ist, und vorausgesetzt dass ein Hinweissignal (1, 2 ... m) von der zumindest einen Erfassungseinrichtung (1, 2 ... n) erzeugt worden ist.

16. Sicherheitsverfahren nach einem der Ansprüche 13 bis 15, welches ein Blockieren des Fahrzeuggaspedals umfasst, falls die Bremsanforderung an das Fahrzeugbremssystem gesendet worden ist.

17. Sicherheitsverfahren nach einem der Ansprüche 13 bis 16, welches ein Messen der Zeit T_{brake} von dem Zeitpunkt an, zu dem die Bremsanforderung gesendet worden ist, und ein Gestatten umfasst, wenn T_{brake} > Tₜₕ₂ ist, dass ein Deaktivierungssignal zum Aufheben der Bremsanforderung an das Fahrzeugbremssystem gesendet wird.

18. Sicherheitsverfahren nach Anspruch 17, welches ein Empfangen eines Leerlaufsignals umfasst, welches angibt, dass das Getriebe des Fahrzeugs sich im Leerlauf befindet.

19. Sicherheitsverfahren nach Anspruch 17, welches ein Empfangen eines Offensignals umfasst, welches angibt, dass die betreffende Tür oder das Fenster geöffnet worden ist.

20. Sicherheitsverfahren nach Anspruch 18, welches ein Senden einer Deaktivierungsanforderung zum Aufheben der Bremsanforderung an das Fahrzeugbremssystem umfasst, falls die Bremsanforderung gesendet worden ist, danach ein Leerlaufsignal empfangen worden ist und T_{brake} > Tₜₕ₂ ist.

21. Sicherheitsverfahren nach Anspruch 19, welches ein Senden einer Deaktivierungsanforderung zum Aufheben der Bremsanforderung an das Fahrzeugbremssystem umfasst, falls die Bremsanforderung gesendet worden ist, danach ein Offensignal empfangen worden ist, und T_{brake} > Tₜₕ₂ ist.

22. Sicherheitsverfahren nach einem der Ansprüche 13 bis 18 oder 20, welches ein Empfangen eines Beschleunigungssignals, welches angibt, ob das Fahrzeug beschleunigt, und, falls die Bremsanforderung gesendet worden ist, danach ein Beschleunigungssignal empfangen worden ist und ein Leerlaufsignal empfangen worden ist, ein Senden einer Deaktivierungsanforderung zum Aufheben der Bremsanforderung an das Fahrzeugbremssystem umfasst.

23. Sicherheitsverfahren nach einem der Ansprüche 13 bis 17, 19 oder 21, welches ein Empfangen eines Beschleunigungssignals, welches angibt, ob das Fahrzeug beschleunigt, und, falls die Bremsanforderung gesendet worden ist, danach ein Beschleunigungssignal empfangen worden ist und ein Offensignal empfangen worden ist, ein Senden einer Deaktivierungsanforderung zum Aufheben der Bremsanforderung an das Fahrzeugbremssystem umfasst.

24. Sicherheitsverfahren nach einem der Ansprüche 13 bis 23, welches ein wieder Inkraftsetzen einer Bremsanforderung nach einer Anzahl X aufeinanderfolgender Versuche zum Starten des Motors umfasst.

25. Computerprogrammprodukt mit Computerprogrammanweisungen, um ein Computersystem dazu in die Lage zu versetzen, Schritte gemäß dem Verfahren nach einem der Ansprüche 13 bis 24 auszuführen, wenn die Computerprogrammanweisungen auf dem Computersystem ablaufen.

26. Computerprogrammprodukt nach Anspruch 25, in dem die Computerprogrammanweisungen auf einem Medium gespeichert sind, das von einem Computersystem gelesen werden kann.

## Revendications

1. Système de sécurité pour les véhicules équipés de freins de maintien, lequel système comprend au moins un dispositif de détection (1, 2...n) situé à proximité des portes ou des fenêtres du véhicule et adapté à la génération d'un signal d'indication (1, 2...m) si un ou plusieurs critères d'indication sont remplis,
**caractérisé en ce que** le système est fourni avec
- une unité de commande adaptée à la réception d'un signal de désactivation indiquant que le frein de maintien du véhicule a été désactivé, et
- si le signal de désactivation indique que le frein de maintien a été désactivé et
- si un signal d'indication (1,2...m) a été généré à partir dudit au moins un dispositif de détection (1, 2...n), alors l'unité de commande est adaptée à l'envoi d'une demande de freinage au système de freinage du véhicule sous la forme d'un couple de retardement graduellement croissant, suite à quoi le système de freinage freine le véhicule.

2. Système de sécurité selon la revendication 1, dans lequel l'unité de commande est adaptée à la mesure du temps T_{BSB} à partir du moment où le frein de maintien est désactivé et d'envoyer une demande de freinage au système de freinage du véhicule lorsque T_{BSB} est inférieur à une valeur seuil prédéfinie Tₜₕ₁, un signal de désactivation a été reçu indiquant que le frein de maintien a été désactivé, et un signal d'indication (1, 2...m) a été généré à partir dudit au moins un dispositif de détection (1, 2...n).

3. Système de sécurité selon la revendication 1 ou 2, dans lequel l'unité de commande est adaptée à la réception d'un signal de vitesse qui indique la vitesse du véhicule et à l'envoi d'une demande de freinage au système de freinage du véhicule lorsque la vitesse V du véhicule est inférieure à une valeur seuil prédéfinie Vₜₕ, un signal de désactivation de l'unité de commande a été reçu indiquant que le frein de maintien a été désactivé, et un signal d'indication (1,2...m) a été généré à partir dudit au moins un dispositif de détection (1, 2...n).

4. Système de sécurité selon l'une quelconque des revendications précédentes, dans lequel l'unité de commande est adaptée au blocage de la pédale d'accélérateur du véhicule si ladite demande de freinage a été envoyée au système de freinage du véhicule.

5. Système de sécurité selon l'une quelconque des revendications précédentes, dans lequel l'unité de commande est adaptée à la mesure du temps T_{frein} à partir du moment auquel ladite demande de freinage a été envoyée, et pour permettre, lorsque T_{frein} > Tₜₕ₂, où Tₜₕ₂ est une valeur seuil prédéfinie, l'envoi d'une demande de désactivation au système de freinage du véhicule pour annuler ladite demande de freinage.

6. Système de sécurité selon la revendication 5, dans lequel l'unité de commande est adaptée à la réception d'un signal d'engrenage neutre indiquant que la boîte de vitesses du véhicule est dans un engrenage neutre.

7. Système de sécurité selon la revendication 5, dans lequel l'unité de commande est adaptée à la réception d'un signal d'ouverture indiquant que la porte ou la fenêtre correspondante a été ouverte.

8. Système de sécurité selon la revendication 6, dans lequel l'unité de commande est adaptée à l'envoi d'une demande de désactivation au système de freinage du véhicule pour annuler ladite demande de freinage, si ladite demande de freinage a été envoyée, un signal d'engrenage neutre a ensuite été reçu et T_{frein} > Tₜₕ₂.

9. Système de sécurité selon la revendication 7, dans lequel l'unité de commande est adaptée à l'envoi d'une demande de désactivation au système de freinage du véhicule pour annuler ladite demande de freinage, si ladite demande de freinage a été envoyée, un signal d'ouverture a ensuite été reçu et T_{frein} > Tₜₕ₂.

10. Système de sécurité selon l'une quelconque des revendications 1 à 6 ou 8, dans lequel l'unité de commande est adaptée à la réception d'un signal d'accélération qui indique si le véhicule accélère et à envoi, si ladite demande de freinage a été envoyée, un signal d'accélération a ensuite été reçu et un signal d'engrenage neutre a été reçu, d'une demande de désactivation au système de freinage du véhicule pour annuler ladite demande de freinage.

11. Système de sécurité selon l'une quelconque des revendications 1 à 5, 7 ou 9, dans lequel l'unité de commande est adaptée à la réception d'un signal d'accélération qui indique si le véhicule accélère et à l'envoi, si ladite demande de freinage a été envoyée, un signal d'accélération a ensuite été reçu et un signal d'ouverture a été reçu, d'une demande de désactivation au système de freinage du véhicule pour annuler ladite demande de freinage.

12. Système de sécurité selon l'une quelconque des revendications précédentes, dans lequel l'unité de commande est adaptée ay rétablissement d'une demande de freinage après un nombre X de tentatives successives de démarrage du moteur.

13. Procédé de sécurité dans un système de sécurité pour les véhicules équipés de freins de maintien, lequel système comprend au moins un dispositif de détection (1,2...n) situé à proximité des portes ou des fenêtres du véhicule et adapté à la génération d'un signal d'indication (1,2...m) si un ou plusieurs critères d'indication sont remplis, **caractérisé** que le procédé comprend
- si un signal de désactivation a été reçu indiquant que le frein de maintien du véhicule a été désactivé et
- si un signal d'indication (1,2...m) a été généré à partir dudit au moins un dispositif de détection (1,2...n), alors une demande de freinage est envoyée au système de freinage du véhicule sous la forme d'un couple de retardement graduellement croissant, suite à quoi le système de freinage freine le véhicule.

14. Procédé de sécurité selon la revendication 13, qui comprend la mesure du temps T_{BSB} à partir du moment où le frein de maintien est désactivé et l'envoi d'une demande de freinage au système de freinage du véhicule lorsque T_{BSB} est supérieur à une valeur seuil prédéfinie Tₜₕ₁, à condition qu'un signal de désactivation ait été reçu indiquant que le frein de maintien a été désactivé, et qu'un signal d'indication (1, 2...m) a été généré à partir dudit au moins un dispositif de détection (1,2...n).

15. Procédé de sécurité selon la revendication 13 ou 14, qui comprend l'envoi d'une demande de freinage au système de freinage du véhicule lorsque la vitesse du véhicule est supérieure à une valeur seuil prédéfinie Vₜₕ, à condition qu'un signal de désactivation ait été reçu indiquant que le frein de maintien du véhicule a été désactivé, et qu'un signal indiquant un signal (1,2...m) a été généré à partir dudit au moins un dispositif de détection (1, 2...n).

16. Procédé de sécurité selon l'une quelconque des revendications 13 à 15, qui comprend le blocage de la pédale d'accélérateur du véhicule si ladite demande de freinage a été envoyée au système de freinage du véhicule.

17. Procédé de sécurité selon l'une quelconque des revendications 13 à 16, qui comprend la mesure du temps T_{frein} à partir du moment auquel ladite demande de freinage a été envoyée, et l'autorisation, lorsque T_{frein} > Tₜₕ₂, de l'envoi d'une demande de désactivation au système de freinage du véhicule pour annuler ladite demande de freinage.

18. Procédé de sécurité selon la revendication 17, qui comprend la réception d'un signal d'engrenage neutre indiquant que la boîte de vitesses du véhicule est dans un engrenage neutre.

19. Procédé de sécurité selon la revendication 17, qui comprend la réception d'un signal d'ouverture indiquant que la porte ou la fenêtre correspondante a été ouverte.

20. Procédé de sécurité selon la revendication 18, qui comprend l'envoi d'une demande de désactivation au système de freinage du véhicule pour annuler ladite demande de freinage, si ladite demande de freinage a été envoyée, un signal d'engrenage neutre a ensuite été reçu et T_{frein} > Tₜₕ₂.

21. Procédé de sécurité selon la revendication 19, qui comprend l'envoi d'une demande de désactivation au système de freinage du véhicule pour annuler ladite demande de freinage, si ladite demande de freinage a été envoyée, un signal d'ouverture a ensuite été reçu et T_{frein} > Tₜₕ₂.

22. Procédé de sécurité selon l'une quelconque des revendications 13 à 18 ou 20, qui comprend la réception d'un signal d'accélération indiquant si le véhicule accélère et l'envoi, si ladite demande de freinage a été envoyée, un signal d'accélération a ensuite été reçu et un signal d'engrenage neutre a été reçu, d'une demande de désactivation au système de freinage du véhicule pour annuler ladite demande de freinage.

23. Procédé de sécurité selon l'une quelconque des revendications 13 à 17, 19 ou 21, qui comprend la réception d'un signal d'accélération indiquant si le véhicule accélère et l'envoi, si ladite demande de freinage a été envoyée, un signal d'accélération a ensuite été reçu et un signal d'ouverture a été reçu, d'une demande de désactivation au système de freinage du véhicule pour annuler ladite demande de freinage.

24. Procédé de sécurité selon l'une quelconque des revendications 13 à 23, qui comprend la réactivation d'une demande de freinage après un nombre X de tentatives successives de démarrage du moteur.

25. Produit de programme informatique comprenant des instructions de programme informatique pour permettre à un système informatique dans un véhicule d'exécuter les étapes selon le procédé selon l'une quelconque des revendications 13 à 24, lorsque les instructions de programme informatique sont exécutées sur ledit système informatique.

26. Produit de programme informatique selon la revendication 25, dans lequel les instructions de programme informatique sont stockées sur un support qui peut être lu par un système informatique.
